# EUROPEAN PATENT SPECIFICATION

(11) **EP 3 725 602 B1**
(45) Date of publication and mention of the grant of the patent: **29.12.2021**
(21) Application number: 19170122.6
(22) Date of filing: 18.04.2019
(51) Int. Cl.: B60S 3/00, C08L 23/12, C08L 23/14, B60S 1/48

(54) **DUCTS OF AN AUTOMOTIVE WASHER SYSTEM**
LEITUNGEN FÜR EINE AUTOSCHEIBENWASCHANLAGE
CONDUITS D'UN SYSTÈME DE LAVAGE D'AUTOMOBILES

(43) Date of publication of application: 21.10.2020
(73) Proprietor: Continental Automotive Czech Republic s.r.o., 744 01 Frenstat pod Radhostem (CZ)
(72) Inventor: OBR, Ales, 30165 Hannover (DE)
(74) Representative: Continental Corporation

(56) References cited:
- EP-A1- 1 291 385
- EP-A1- 3 020 760

## Description

### Technical field

The present invention relates to ducts of an automotive washer system which convey a wash fluid from a storage tank to spraying nozzles at the application sites, including a windshield and, optionally, also a rear window and/or head lights and optionally also a camera.

### Background of the invention

A washer system is a mandatory component of all cars and its flawless function is essential for safe operation of a car in bad weather, in particular on wet roads. The washer system of a car consists of a wash fluid storage tank, which is usually located under the hood near the engine, the ducts, spraying nozzles and an electrically powered drive.

The ducts of a car washer system, such as hoses or tubes must survive without any damage, such as rupture, cracking and leakage of wash fluid at the connecting points, considerable thermal stress and, moreover, they must cope with the sustained effects of chemical substances contained in a wash fluid. A washer system must safely work for an entire lifetime of a car or until the overhaul.

The thermal stress includes the exposition to temperatures in the range of from about -30 °C (i.e. the lowest temperature encountered in winter season) to 50 °C, or even more, in summer, such as on a hot summer day when the hood is heated by direct sunlight.

The chemical composition of fluids is largely dependent on the season. A summer fluid, i.e. the fluid used when no temperatures below zero are expected, usually comprises soapy water, i.e. water added with detergents to help clean the treated surfaces and, optionally, a small amount of antifreeze, to be on the safe side should the temperature unexpectedly drop below zero so as ice would not damage any one of the included components of the washer system. The composition of a winter fluid is more complex, and apart from some water, it mainly contains a lower alcohol, particularly methanol and a small amount of ethylene glycol. The material of the ducts of a washer system should be inert towards any one of the above mentioned components or mixtures thereof.

So far, many plastic compositions, essentially based on polymers, including polyolefins, such as polypropylene or polyamides and blends or compounds thereof have been used for washer system hoses. As plastic compositions based on a single polymer have not been capable of meeting all the requirements which the hoses should fulfil, it has been necessary to use polymer blends. Due to incompatibility between the used polymer phases which are not properly mixed on the interface of the resulting mixtures, blends or compounds often contain further components, including compatibilizers, such as MAH (maleic anhydride) or EPDM grafted polymers (such as MAH or EPDM grafted polypropylene). Apart from the fact that such compatibilizers affect the behavior of the resulting materials, they are often expensive and thus should be avoided for the reasons of economy.

One of the polymer compositions used for the manufacture of washer hoses has been an impact block propylene-ethylene copolymer (Sabic PP 71) combined with a black masterbatch (MB). The drawback of this composition is a huge difference in viscosities between PP and black MB, which leads to problems with blocking of the die nozzle. Owing to poor stabilization this material quickly loses viscosity and mechanical properties. What is crucial, is that the material does not meet the requirements as far as the working temperature range is concerned.

A further material so far used for the intended purpose is a polymer blend RAU PP (Rehau AG, Switzerland), which comprises 72 % polypropylene (PP), 19 %polyamide 6 (PA 6) and 9 % compatibilizer, which is a MAH grafted polymer (maleic anhydride grafted polypropylene). Despite the presence of a compatibilizer the incompatibility between PP and PA has not been overcome and there has been huge batch to batch variation which has affected the freeze test. The blend is difficult to process as Tₘ of the components are too different. There are potential problems with melting and content of gel particles. Moreover T_{g} is unsuitable for the intended application.

Another blend used so far is based on PA 6/12 or PA12 impact modified by EPDM. The material e.g. comprises 64% PA, 27 % EPDM and 9 % EPDM grafted PP. The presence of high amount of EPDM in PA matrix however brings about problems with critical wall shear stresses during the extrusion. EP 1 291 385 discloses another material for providing tubular molded products based on blends of a propylene polymer and an olefin-based polymer.

A frequent problem associated with the manufacture of washer hoses from known polymer blends is the drool phenomenon which takes place during processing the hoses by extrusion molding. This problem is mainly due to insufficient compatibility of the polymer phases which becomes critical with shear stress in the course of extrusion molding.

As a result of extensive research a new composition has been found which is free of the above mentioned drawbacks and which has the characteristics fully complying with the relevant requirements

### Summary of the invention

The present invention provides ducts of an automotive washer system wherein the ducts consist of a blend of (i) propylene-ethylene copolymer and (ii) a thermoplastic polyolefin elastomer selected from ethylene-octene copolymer and polybutene in the weight ratio of (i) : (ii) 8-9 :1 wherein said blend further comprises up to 6 % by weight, based on the polymer mixture, of auxiliary substances selected from antioxidants, UV stabilizers, inorganic fillers, colorants and, optionally, processing aids.

The present invention further provides the above mentioned ducts wherein either component (i) is an impact block propylene-ethylene copolymer and component (ii) is a thermoplastic poly (ethylene-octene) elastomer, or component (i) is a random propylene-ethylene copolymer and component (ii) is a thermoplastic polybutene elastomer.

The above mentioned ducts can be in the form of smooth or corrugated hoses or tubes which are preferably manufactured by extrusion molding.

### Description of the embodiments of the invention

The polymer basis of the ducts of an automotive washer system is a blend of (i) propylene-ethylene copolymer and (ii) a thermoplastic polyolefin elastomer selected from ethylene-octene copolymer and polybutene. Both the components of this polymer blend are similar enough to each other as a result of which no further component (compatibilizer) is needed for achieving sufficient compatibility.

As propylene-ethylene copolymers (component (i)) essentially any block or random propylene-ethylene copolymers can be used. If component (i) is a block propylene-ethylene copolymer, the preferable co-component (ii) of the polymer blend is a thermoplastic poly (ethylene-octene) elastomer. If component (i) is a random propylene-ethylene copolymers, the preferable co-component (ii) of the polymer blend is a thermoplastic polybutene elastomer.

The weight ratio of (i) : (ii) is 8-9 :1, preferably about 8.8:1.

The polymer blend composition further comprises up to 6 % by weight, based on the polymer mixture, of auxiliary substances selected from antioxidants, UV stabilizers, inorganic fillers, colorants and, optionally, processing aids. The antioxidants (AOX) include e.g. phenolic based stabilizers, phosphorus based stabilizers, such as phosphites and phosphonites, sulphuric/sulphur based stabilizers, such as a thioether AOX DSTPD, HALS stabilizers (hindered amine light/UV stabilizers) or NOR-HALS stabilizers, UV absorbers. Various mineral fillers can be also present, such as calcium carbonate or talc.

As preferable colorant Black MB (masterbatch) can be mentioned. Black MB comprises carbon black dispersed in virgin or recycled LLDPE or LDPE.

### Examples

### Example 1

"Taboren PR22000 black":

**Compound composition**

| **Material** | **Dosing level (% by weight)** |
|---|---|
| Mosten EH501¹ (Impact PP copolymer) (producer: Unipetrol RPA) | 85,9 |
| Engage 8180² (Polyoctene elastomer) (Producer: Dow) | 10 |
| Irganox 1010 (AOX - CAS no. 6683-19-8) (Producer: BASF) | 0,3 |
| Irgafos 168 (AOX - CAS no. 31570-04-4) (Producer: BASF) | 0,3 |
| CaCO₃ (Omyacarb 2VA - Top cut D98%: 12 microns; d50%: 2,5 microns) (Producer: Omya) | 1,5 |
| Black MB (Maxithen HP98211 - LDPE) (Producer: Gabriel-Chemie) | 2 |

| | |
|---|---|
| Notes: ¹ MFI (230 °C/2.16 kg): 0,5 g/10 min; Tm (DSC): 162-170 °C; ² Density: 0.863 g/cm³; MFI(230 °C/2.16 kg): 0.50 g/10 min; Tm (DSC): 47 °C; Tg: -55 °C, | |

### Preparation of compound granulate:

Appropriate amounts of Mosten EH 501 and Engage 8180 , a dispersion of Irganox 1010 and Irgafos 168 in CaCO₃ preliminary prepared in a high speed mixer, and Black MB are introduced into a twin-screw compounding line with co-rotating screws with one side feeder with L/D ratio 33. The compounding line is heated up on the max. temperature 195 °C and all the polymeric components, including black masterbatch (Black MB), are dosed via main feeder and the stabilizers dispersed in calcium carbonate are dosed via side feeder and/or via main feeder. The resulting compound is passed to a string granulator or underwater peletizing system.

### Hose preparation

The compound granulate is processed in a single screw extrusion unit with L/D ratio 25 - 34 without mixing elements equipped with vacuum or overpressure corrugator and on-line cutting unit. The used processing parameters are as follows: temperature: max. 240 °C, Rpm: 98,4 and line speed: 20 m/min.

### Example 2

"Taboren PB12010 black":

**Compound composition:**

| **Material** | **Dosing level (%by weight)** |
|---|---|
| Vestolen P9421 Natur³ (Random PP copolymer) | 85,9 |
| (Producer: Sabic) | |
| Koattro KT AR05⁴ (Polybutene-1) (Producer: LyondellBasell) | 10 |
| Irganox 1010 (AOX - CAS no. 6683-19-8) Producer: BASF) | 0,25 |
| Irgafos 168 (AOX - CAS no. 31570-04-4) (Producer: BASF) | 0,25 |
| CaCO₃ (Omyacarb 2VA - Top cut D98%: 12 microns; d50%: 2,5 microns) (Producer: Omya) | 1,5 |
| Black MB (Maxithen HP 98211 - LDPE) (Producer: Gabriel-Chemie) | 2 |

| | |
|---|---|
| Notes: ³ Density: 0.898 g/cm³); MFI (230 °C/2.16 kg): 0.30 g/10 min; Vicat softening temperature (10 N): 130°C, (50 N): 61°C ⁴ Density: 0.870 g/cm³); MFR (190 °C/2.16 kg): 1.3 g/10 min | |

### Preparation of compound granulate:

Appropriate amounts of Vestolen P9421 Natur and Koattro KT AR05, a dispersion of Irganox 1010 and Irgafos 168 in CaCO₃ preliminary prepared in a high speed mixer, and Black MB are introduced into a single screw compounding line (Buss technology) with pulsing screw and L/D ratio 11. The line is equipped by either gear pump or staging screw.

The compounding line is heated up on the max. temperature 195 °C and all the polymeric components, including black masterbatch (Black MB), are dosed via main feeder and the stabilizers dispersed in calcium carbonate are dosed via side feeder and/or via main feeder. The resulting compound is passed to a string granulator or underwater peletizing system.

### Hose preparation

The compound granulate is processed to hoses in a single screw extrusion unit at the same conditions as those mentioned in Example 1.

### Example 3 - Hose testing

The hoses according to Examples 1 and 2 and hoses prepared from comparative materials wherein all the tested compounds of the invention and the comparative compounds contained the same stabilizers in the same amounts were subjected to
1. freeze test, test carried out in the range of from -20 to 90 °C, 12 cycles; and test carried out in the range of from -40 to 95 °C, 35 cycles; and
2. Pressure tightness test, including the test carried out in the range of from -20 to 90 °C; and, test carried out in the range of from -30 to 95 °C.

The obtained results are summarized in the following Table. The percentages specified in column 2 relate to the proportion of an elastomeric component; they are meant by weight and refer to the material, as a whole (100 % w/w). "Yes" or "No" mean that the respective material passed or failed in the test. As can be seen from the Table it is only the hoses prepared according to the present invention that passed all the four tests.

The above mentioned Examples are presented for illustrative purposes only and they should not be meant as any limitation of the scope of the invention which is only defined by the following claims.

| **Material denomination** | **Material specification** | **Freeze test** | | **Pressure tightness test** | |
|---|---|---|---|---|---|
| | | | | | |
| Borealis SA233 CF | heterophasic copolymer | yes | yes | no | no |
| Hifax 1956 A | heterophasic copolymer | yes | yes | no | no |
| PPC1UFO black | 20% of Sabic Fortify + impact PP copolymer (Bralen K880) | yes | yes | no | no |
| PPC1UFO black_S105552 | 15% of Sabic Fortify + impact PP copolymer (Bralen K880) | yes | yes | no | no |
| PPC1UFO black_S105598 | 15% of Koattro KT AR05 + impact PP copolymer (Bralen K880) | yes | yes | no | no |
| Innopol CS 2-8303 | 15% of Engage 8180 + impact copolymer (Mosten EH501) | yes | no | no | no |
| Innopol CS 2-8306 | 30% of Engage 8180 + impact copolymer (Mosten EH501) | yes | no | no | no |
| Taboren PR21000 black/V6948 | 15% of Enagage 8180 + impact copolymer (Mosten EH501) | yes | yes | no | no |
| Taboren PR21000 black_11_2017_02 | 30% of Enagage 8180 + impact copolymer (Mosten EH501) | yes | yes | no | no |
| **Taboren PB12010 black** | **10% of Koattro KT MR05 + random copolymer (Vestolen P9421)** | **yes** | **yes** | **yes** | **yes** |
| **Taboren PR22000 black** | **10% of Engage 8180 + impact copolymer (Mosten EH501)** | **yes** | **yes** | **yes** | **yes** |
| Taboren PB22010 black | 10% of Koattro KT MR05 + impact copolymer (Mosten EH501) | yes | yes | no | no |
| RAU PP 8402 - 1010 | commercial material | yes | no | no | no |
| Sabic PP 71EK71 | commercial material | yes | no | no | no |
| Vestamid DX9302 black | commercial material | yes | yes | yes | no |
| Vestamid LX 9006 black | commercial material | yes | yes | yes | no |

## Claims

1. Ducts of an automotive washer system wherein the ducts consist of a blend of (i) propylene-ethylene copolymer and (ii) a thermoplastic polyolefin elastomer selected from ethylene-octene copolymer and polybutene in the weight ratio of (i) : (ii) 8-9 :1 wherein said blend further comprises up to 6 % by weight, based on the polymer mixture, of auxiliary substances selected from antioxidants, UV stabilizers, inorganic fillers, colorants and, optionally, processing aids.

2. Ducts according to claim 1 wherein component (i) is an impact block propylene-ethylene copolymer and component (ii) is a thermoplastic poly (ethylene-octene) elastomer.

3. Ducts according to claim 1 wherein component (i) is a random propylene-ethylene copolymer and component (ii) is a thermoplastic polybutene elastomer.

4. Ducts according to any one of claims 1 to 3 wherein the ducts are in the form of smooth or corrugated hoses or tubes.

5. Ducts according to claim 4 wherein the hoses or tubes have been formed by extrusion molding.

## Patentansprüche

1. Leitungen für eine Kraftfahrzeug-Wascheranlage, wobei die Leitungen aus einem Blend von (i) Propylen-Ethylen-Copolymer und (ii) einem thermoplastischen Polyolefinelastomer, das aus Ethylen-Octen-Copolymer und Polybuten ausgewählt ist, im Gewichtsverhältnis von (i):(ii) von 8-9:1 bestehen, wobei der Blend ferner bis zu 6 Gew.-%, bezogen auf die Polymermischung, Hilfssubstanzen, die aus Antioxidantien, UV-Stabilisatoren, anorganischen Füllstoffen, Farbmitteln und gegebenenfalls Verarbeitungshilfen ausgewählt sind, aufweist.

2. Leitungen nach Anspruch 1, wobei es sich bei Komponente (i) um ein schlagzähes Propylen-Ethylen-Copolymer handelt und es sich bei Komponente (ii) um ein thermoplastisches Poly(ethylen-octen)elastomer handelt.

3. Leitungen nach Anspruch 1, wobei es sich bei Komponente (i) um ein statistisches Propylen-Ethylen-Copolymer handelt und es sich bei Komponente (ii) um ein thermoplastisches Polybutenelastomer handelt.

4. Leitungen nach einem der Ansprüche 1 bis 3, wobei die Leitungen in Form von glatten oder gewellten Schläuchen oder Rohren vorliegen.

5. Leitungen nach Anspruch 4, wobei die Schläuche oder Rohre durch Extrusionsformen gebildet wurden.

## Revendications

1. Tuyaux d'un système de lavage d'automobile, les tuyaux étant constitués d'un mélange de (i) copolymère de propylène-éthylène et (ii) d'un élastomère de polyoléfine thermoplastique choisi parmi un copolymère d'éthylène-octène et un polybutène en un rapport en poids de (i) : (ii) de 8 à 9 : 1, ledit mélange comprenant en outre jusqu'à 6 % en poids, sur la base du mélange de polymères, de substances auxiliaires choisies parmi des antioxydants, des stabilisants UV, des charges inorganiques, des colorants et, éventuellement des auxiliaires de traitement.

2. Tuyaux selon la revendication 1, le composant (i) étant un copolymère de propylène-éthylène à blocs résistant aux chocs et le composant (ii) étant un élastomère de poly(éthylène-octène) thermoplastique.

3. Tuyaux selon la revendication 1, le composant (i) étant un copolymère de propylène-éthylène statistique et le composant (ii) étant un élastomère de polybutène thermoplastique.

4. Tuyaux selon l'une quelconque des revendications 1 à 3, les tuyaux étant sous forme de flexibles ou de tubes lisses ou ondulés.

5. Tuyaux selon la revendication 4, les flexibles ou les tubes ayant été formés par un moulage par extrusion.
